# EUROPÄISCHE PATENTSCHRIFT

(11) **EP 2 562 407 B1**
(45) Veröffentlichungstag und Bekanntmachung des Hinweises auf die Patenterteilung: **06.04.2016**
(21) Anmeldenummer: 12005199.0
(22) Anmeldetag: 14.07.2012
(51) Int. Cl.: F02M 26/00, F02D 41/00

(54) **Abgasrückführeinrichtung für eine Brennkraftmaschine eines Fahrzeuges sowie Verfahren zum Betreiben einer Abgasrückführeinrichtung**
Exhaust gas recirculation device for a combustion engine of a vehicle and method for operating an exhaust gas recirculation device
Dispositif de récirculation des gaz d'échappement d'un moteur à combustion interne d'un véhicule et procédé de fonctionnement d'un dispositif de récirculation de gaz d'échappement

(30) Priorität: 03.08.2011 DE 102011109264
(43) Veröffentlichungstag der Anmeldung: 27.02.2013
(73) Patentinhaber: MAN Truck & Bus AG, 80995 München (DE)
(72) Erfinder: Fischer, Helmut, 90763 Fürth (DE); Finkel, Simon, 90559 Burgthann (DE); Achenbach, Thomas, 90513 Zirndorf (DE); Uttinger, Roland, 90453 Nürnberg (DE); Hollweck, Johannes, 92237 Sulzbach-Rosenberg (DE)

(56) Entgegenhaltungen:
- EP-A1- 0 811 762
- EP-A1- 2 278 148
- EP-A2- 1 132 609
- WO-A1-02/10574
- WO-A1-02/077428
- WO-A1-2007/141435
- WO-A2-2008/048909
- DE-A1-102005 034 362
- DE-A1-102010 031 693

## Beschreibung

Die Erfindung betrifft eine Abgasrückführeinrichtung für eine Brennkraftmaschine eines Fahrzeuges nach dem Oberbegriff des Anspruchs 1 sowie ein Verfahren zum Betreiben einer Abgasrückführeinrichtung nach dem Oberbegriff des Anspruchs 11.

Bei derartigen Abgasrückführeinrichtungen besteht, insbesondere in Verbindung mit stark schwefelhaltigen Kraftstoffen, das Problem, dass sich bei einem niedrigen Lastkollektiv der Brennkraftmaschine im Luftverteilerrohr Kondensat bilden kann. Dieses Kondensat kann in Verbindung mit den Schwefelteilchen in der Abgasrückführung zu Schwefelsäure reagieren und dadurch einen verstärkten Verschleiß im Bereich der Zylinderausnehmungen eines Zylinderkopfes der Brennkraftmaschine verursachen.

Um dies zu vermeiden, ist aus der US 6,367,256 B1 bereits ein Aufbau einer Abgasrückführeinrichtung bekannt, bei der von einem Abgasrohr eine erste Abgasrückführleitung abgezweigt ist, die über einen Abgaskühler zu einer Luftseite der Brennkraftmaschine rückgeführt ist. Ferner ist dort eine zweite Abgasrückführleitung als Bypassleitung vorgesehen, mittels der der Abgaskühler umgangen werden kann, so dass Abgase auch ohne Abkühlung zu der Luftseite der Brennkraftmaschine rückgeführt werden können. Die erste Abgasrückführleitung und die eine Bypassleitung ausbildende zweite Abgasrückführleitung werden stromauf einer Luft-Zumischstelle zusammengeführt, an der die mittels einer Luftleitung zu der Luftseite der Brennkraftmaschine geführte Luft mit dem rückgeführten Abgas vermischt wird. Stromauf der Luft-Zumischstelle sind hier einige Kondensationsfallen vorgesehen, mittels denen im zusammengeführten, rückgeführten Abgasstrom enthaltene Kondensattröpfchen abgeschieden werden können. Eine weitere Kondensationsfalle ist auch noch stromab der Luft-Zumischstelle in der Luftleitung zur Brennkraftmaschine vorgesehen. Insgesamt handelt es sich hierbei um einen Aufbau, der relativ voluminös ist, so dass dieser Aufbau der Abgasrückführeinrichtung in Verbindung mit einer Brennkraftmaschine relativ viel Platz einnimmt.

Ein ähnlicher Aufbau einer Abgasrückführeinrichtung ist auch aus der DE 196 80 305 C2 bekannt.

Die EP2278148A1 zeigt eine Abgasrückführeinrichtung mit zwei getrennten Abgasrückführleitungen, wobei in einer der beiden Leitungen ein AGR Kühler angeordnet ist. Beide Leitungen weisen jeweils ein Regelventil auf.

Die EP1132609A2 zeigt eine Abgasrückführeinrichtung mit einem Abgasventil als Mischbereich, in den zwei Anschlussstutzen zur Leitung von rückgeführtem Abgas einmünden, die an gegenüberliegenden Enden des Abgaskrümmers abzweigen. Dabei befinden sich Kühler, Abgasventil und Anschlussstutzen auf der Seite der Abgassammelleiste.

Die EP0811762A1 zeigt die prinzipielle Möglichkeit zwei getrennte Abgasrückführleitungen an gegenüberliegenden Seiten des Motors auf die Ansaugseite zu leiten. Diese werden nicht mehr zusammengeführt, sondern das Abgas an getrennten Stellen in die Luftleitung eingeleitet.

Demgegenüber ist es Aufgabe der vorliegenden Erfindung, eine Abgasrückführeinrichtung für eine Brennkraftmaschine eines Fahrzeuges zu schaffen, die baulich kompakt und fertigungstechnisch einfach herstellbar ist und mittels der die Kondensation in der Abgasrückführeinrichtung, insbesondere in Verbindung mit stark schwefelhaltigen Kraftstoffen zuverlässig verhindert werden kann. Ferner ist es eine Aufgabe der vorliegenden Erfindung, ein Verfahren zum Betreiben einer Abgasrückführeinrichtung für eine Brennkraftmaschine eines Fahrzeuges zur Verfügung zu stellen, mittels der die Kondensatbildung zuverlässig reduziert bzw. gegebenenfalls sogar vermieden werden kann.

Diese Aufgabe wird gelöst mit den Merkmalen der unabhängigen Patentansprüche. Vorteilhafte Ausgestaltungen hierzu sind jeweils Gegenstand der darauf rückbezogenen Unteransprüche.

Erfindungsgemäß ist eine Abgasrückführeinrichtung für eine Brennkraftmaschine eines Fahrzeuges vorgesehen, die eine mittels einer ersten Absperreinrichtung absperrbare und von einer Abgasseite der Brennkraftmaschine abzweigende erste Abgasrückführleitung aufweist, die über einen Abgaskühler zu einer Luftseite der Brennkraftmaschine rückgeführt ist. Diese Abgasrückführeinrichtung weist weiter mittels einer zweiten Absperreinrichtung absperrbare und den Abgaskühler umgehende Bypassleitung als zweite Abgasrückführleitung auf, mittels der Abgas aus der Brennkraftmaschine ohne Abkühlung zu der Luftseite der Brennkraftmaschine rückführbar ist, wobei die erste Abgasrückführleitung und die eine Bypassleitung ausbildende zweite Abgasrückführleitung stromauf einer Luft-Zumischstelle zusammengeführt sind, an der die mittels einer Luftleitung zu der Luftseite der Brennkraftmaschine geführte Luft mit dem rückgeführten Abgas vermischt werden kann. Weiter umfasst die Abgasrückführeinrichtung eine Steuer- und/oder Regeleinrichtung bzw. ist die Abgasrückführeinrichtung mit einer derartigen Steuer- und Regeleinrichtung gekoppelt, mittels der die Abgasrückführmenge durch Ansteuerung der ersten und/oder zweiten Absperreinrichtung in Abhängigkeit von definierten und/oder vorgegebenen Abgasrückführparametern steuerbar und/oder regelbar ist. Erfindungsgemäß ist vorgesehen, dass die erste Abgasrückführleitung und die zweite Abgasrückführleitung mittels separater Leitungen von der Abgasseite der Brennkraftmaschine abgezweigt sind, vorzugsweise von einem Abgaskrümmer und/oder von in Längsrichtung eines Abgaskrümmers gesehen mehr oder weniger gegenüberliegenden ersten und zweiten Abgaskrümmer-Endbereichen abgezweigt sind, und von dort ausgehend jeweils auf die gegenüberliegende Luftseite der Brennkraftmaschine geführt sind, wobei die gegenüber der zweiten Abgasrückführleitung längere, erste Abgasrückführleitung anschließend weiter entlang der Brennkraftmaschine - je nach Blickrichtung nach vorne bzw. hinten - bis zum luftseitigen Mündungsbereich der zweiten Abgasrückführleitung geführt ist, wo die erste und zweite Abgasrückführleitung in einem Mischbereich zusammengeführt sind. Gemäß einer bevorzugten Ausgestaltung können hierzu konkret die erste und zweite Abgasrückführleitung im Bereich und/oder entlang der gegenüberliegenden Stirnseiten eines vorzugsweise mehrere Zylinderausnehmungen aufweisenden Motorblocks der Brennkraftmaschine auf die Luftseite der Brennkraftmaschine geführt sein.

Mit einer derartigen erfindungsgemäßen Abgasrückführeinrichtung wird ein insgesamt kompakter und wenig Bauraumvolumen einnehmender Aufbau der Brennkraftmaschine mitsamt Abgasrückführeinrichtung möglich, der auch für beengte Einbausituationen geeignet ist. Des Weiteren weist ein derartiger Aufbau den Vorteil auf, dass hier die über den Abgaskühler geführte Abgasrückführleitung wesentlich länger ausgebildet ist als die kürzere zweite Abgasrückführleitung bzw. Bypassleitung, wodurch sichergestellt ist, dass das in der ersten Abgasrückführleitung rückgeführte Abgas eine ausreichende Verweilzeit im Abgaskühler aufweisen kann, während andererseits durch die kurze Bypassleitung sichergestellt ist, dass sich das dort geführte Abgas nicht über eine längere Wegstrecke abkühlt, sondern in gewünschtem Maße das heiße Abgas schnell und funktionssicher zur Verfügung gestellt werden kann, wenn dieses benötigt wird. Mit einem derartigen Aufbau kann somit die Temperatur des rückgeführten Abgases optimal gesteuert werden, und zwar so gesteuert werden, dass kein bzw. nur wenig Kondensat entsteht und somit die Schwefelsäurebildung bei insbesondere stark schwefelhaltigen Kraftstoffen vorteilhaft reduziert bzw. gegebenenfalls sogar ganz verhindert werden kann.

Eine besonders vorteilhafte Steuerung der Abgaskühlung des durch die erste Abgasrückführleitung strömenden Abgases ergibt sich mit einem Aufbau, bei dem sich der Abgaskühler im Wesentlichen über die gesamte Länge der Brennkraftmaschine erstreckt. Dadurch kann eine ausreichend hohe Verweilzeit des abzukühlenden Abgases im Abgaskühler sichergestellt werden bzw. eine ausreichend große Wärmetauscherfläche ausgebildet werden, was sich vorteilhaft auf den Wirkungsgrad der Abgaskühlung auswirkt. Erfindungsgemäß ist der Mischbereich, also der Bereich, an dem die erste und zweite Abgasrückführleitung zusammengeführt sind, durch einen - in Längserstreckungsrichtung des Abgaskühlers gesehen - einem stirnseitigen Gehäusebereich des Abgaskühlers zugeordneten bzw. dort angeordneten Flanschstutzen gebildet in den die den Abgaskühler durchgreifende erste Abgasrückführleitung einmündet und an den weiter die zweite Abgasrückführleitung mittels einer weiteren Flanschverbindung angeschlossen ist. Die erste Abgasrückführleitung kann dabei z.B. materialeinheitlich und/oder einstückig in den Flanschstutzen übergehen oder der Flanschstutzen ist ein separates Bauteil und als solches mit der ersten Abgasrückführleitung und/oder mit dem Abgaskühler verbunden, insbesondere form- und/oder kraft- und/oder stoffschlüssig verbunden.

Mit einem derartigen Flanschstutzen ergibt sich zum einen eine sehr funktionssichere strömungstechnische Kopplung an die erste Abgasrückführleitung, wobei ein derartiger Flanschstutzen zudem auch die Möglichkeit bietet, die zweite Abgasrückführleitung in bauteiltechnisch einfacher Weise, vorzugsweise mittels einer Flanschverbindung funktionssicher anzubinden. Mittels eines derartigen Flanschstutzens erfolgt somit eine bauteiltechnisch und auch fertigungstechnisch einfache Ausgestaltung eines Mischbereichs, an dem die erste und die zweite Abgasrückführleitung zusammengeführt sind, so dass insgesamt auch eine optimale Mischung der gegebenenfalls über diese beiden Abgasrückführleitungen rückgeführten Abgasströme erfolgt.

In diesem Zusammenhang ist es weiter besonders vorteilhaft, wenn am Flanschstutzen gemäß einer weiteren besonders bevorzugten Ausgestaltung stromab der Mündungsbereiche der ersten und zweiten Abgasrückführleitungen ein Luftleitungs-Anschlussflansch für die Luftleitung ausgebildet ist, an dem die Luftleitung selbst angeflanscht ist. Am Flanschstutzen selbst ist dann, stromab des Luftleitungs-Anschlussflansches sowie stromab der Mündungsbereiche der ersten und zweiten Abgasrückführleitungen und damit im Wesentlichen im Bereich der Luft-Zumischstelle, ferner ein Verteilerrohr-Anschlussflansch vorgesehen, an dem ein Luftverteilerrohr der Brennkraftmaschine angeflanscht ist. Mit einem derartigen Aufbau ergibt sich eine weitere wesentliche Funktionsintegration und Bauteilvereinfachung, da hier dann der den Misch- und Anschlussbereich der beiden Abgasrückführleitungen ausbildende Flanschstutzen in einer weiteren funktionsintegrierten Weise gleichzeitig auch den Anschlussbereich für das Luftverteilerrohr ausbildet. Für einen besonders kompakten Aufbau ist es in diesem Zusammenhang weiter vorteilhaft, wenn, wie dies gemäß einer bevorzugten Ausgestaltung der Fall ist, das Luftverteilerrohr mit einem stirnseitigen Flanschbereich am Verteilerrohr-Anschlussflansch angeflanscht ist und sich von dort ausgehend über im Wesentlichen die gesamte Länge der Brennkraftmaschine erstreckt.

Ein besonders kompakter und wenig bauraumintensiver Aufbau ergibt sich mit einer Ausführungsform, bei der der Abgaskühler im Wesentlichen parallel zum Luftverteilerrohr verläuft und/oder bei dem der Abgaskühler mit dem Luftverteilerrohr verbunden ist. Diese Verbindung des Abgaskühlers mit dem Luftverteilerrohr kann auf unterschiedliche Art und Weise erfolgen, zum Beispiel materialeinheitlich und/oder einstückig. Alternativ dazu kann aber auch jedwede geeignete form- und/oder kraft- und/oder stoffschlüssige Verbindung vorgesehen sein.

Gemäß einer weiteren besonders bevorzugten Ausgestaltung wird vorgeschlagen, dass am Luftverteilerrohr wenigstens ein Temperatursensor angeordnet ist, der mit der Steuer- und/oder Regeleinrichtung signaltechnisch gekoppelt ist und der die Ist-Temperatur im Luftverteilerrohr erfasst. Die Steuer- und/oder Regeleinrichtung vergleicht dann die mittels des wenigstens einen Temperatursensors erfasste Ist-Temperatur mit einer definierten und/oder vorgegebenen Soll-Temperatur, bei der es sich insbesondere um eine in einem Kennfeld der Steuer- und/oder Regeleinrichtung abgelegte lastabhängige und/oder lastwechselabhängige Soll-Temperatur handelt. Im Falle einer erfassten Abweichung der Ist-Temperatur von der Soll-Temperatur wird dann die erste oder die zweite Absperreinrichtung bzw. werden beide Absperreinrichtungen so angesteuert, dass über die erste und/oder zweite Abgasrückführleitung eine die Soll-Temperatur im Luftverteilerrohr einstellende Menge an Abgas rückgeführt wird. Mit einer derartigen Ausgestaltung wird somit eine Verfahrensführung bzw. ein Betreiben der Abgasrückführeinrichtung möglich, mittels der die Bildung von Kondensat zuverlässig verhindert werden kann.

Des Weiteren können in der Luftleitung stromauf der Luft-Zumischstelle ein Verdichter, insbesondere ein Verdichter eines Abgasturboladers, und/oder ein Ladeluftkühler und/oder ein Luftfilter angeordnet sein, um der Brennkraftmaschine Luft mit der jeweils gewünschten Luftqualität und/oder Lufttemperatur zur Verfügung zu stellen.

Die Erfindung wird bezüglich des Verfahrens gelöst mit den Merkmalen des Anspruchs 11. Die sich hierdurch ergebenden Vorteile wurden bereits zuvor in Verbindung mit der Würdigung der Vorteile der Abgasrückführeinrichtung näher erläutert. Insofern wird auf die vorherigen Ausführungen verwiesen.

Gemäß einer besonders bevorzugten Verfahrensführung ist vorgesehen, dass die Steuer- und/oder Regeleinrichtung die über die erste und/oder zweite Abgasrückführleitung rückgeführte Abgasmenge so steuert und/oder regelt, dass das Abgas im Bereich nach dem Abgaskühler eine Temperatur zwischen 100°C und 200°C aufweist und/oder die Solltemperatur im Luftverteilerrohr zwischen 80°C und 100°C beträgt und/oder der über die zweite Abgasrückführleitung rückgeführte Abgasstrom eine Temperatur zwischen wenigstens 300°C und maximal 700°C aufweist und/oder die mittels eines Ladeluftkühlers abgekühlte Ladeluft eine Temperatur von 30°C bis 60°C aufweist. Wie erfinderseitige Versuche gezeigt haben, ist insbesondere die Kombination all dieser temperaturbasierten Merkmale hervorragend geeignet, um eine Kondensationsbildung im Bereich der Abgasrückführeinrichtung zu vermeiden. In diesem Zusammenhang hat es sich weiter als besonders vorteilhaft erwiesen, wenn die Steuer- und/oder Regeleinrichtung die Abgasrückführung nur oberhalb einer definierten Kühlmitteltemperatur des Abgaskühlers, vorzugsweise nur oberhalb einer Kühlmitteltemperatur von 60°C, freigibt.

Die Erfindung wird nachfolgend anhand einer Zeichnung näher erläutert.

Es zeigen:
- Fig. 1: schematisch eine perspektivische Vorderansicht einer beispielhaften Ausführungsform einer erfindungsgemäßen Abgasrückführeinrichtung (aus Übersichtlichkeitsgründen ohne Motorblock bzw. Brennkraftmaschine),
- Fig. 2: schematisch eine perspektivische Rückansicht eines Teilbereichs der Abgasrückführeinrichtung gemäß Fig. 1, und
- Fig. 3: schematisch ein Prinzipschaltbild der erfindungsgemäßen Abgasrückführeinrichtung mitsamt Motorblock.

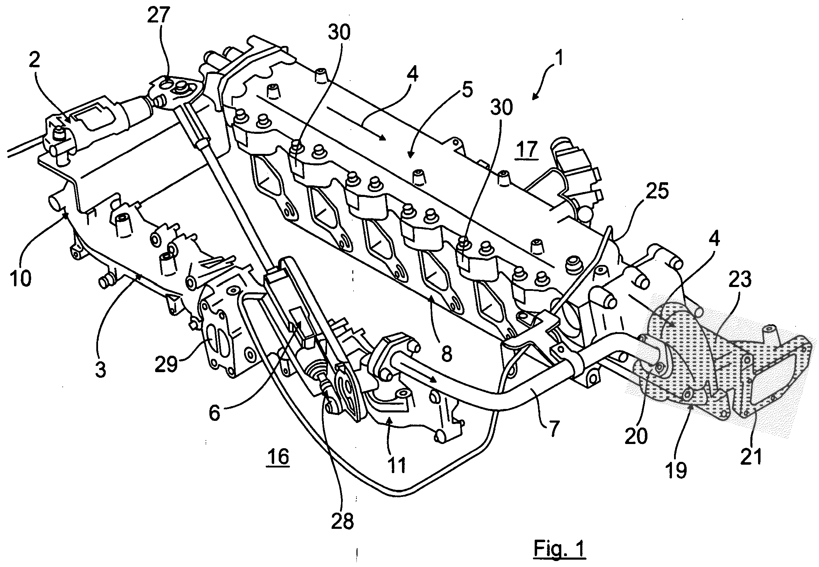

Wie aus den Fig. 1 bis 3 ersichtlich ist, zweigen eine erste Abgasrückführleitung 4 und eine, eine Bypassleitung für einen Abgaskühler 5 ausbildende zweite Abgasrückführleitung 7 von in Längsrichtung x eines Abgaskrümmers 3 der Brennkraftmaschine 9 gegenüberliegenden ersten und zweiten Abgaskrümmer-Endbereichen 10, 11 ab und sind von dort ausgehend entlang der gegenüberliegenden Stirnseiten 12, 13 eines hier beispielhaft sechs Zylinderausnehmungen 14 aufweisenden Motorblocks 15 der Brennkraftmaschine 9 jeweils auf die der Abgasseite 16 gegenüberliegende Luftseite 17 der Brennkraftmaschine 9 geführt. Wie dies den Figuren weiter entnommen werden kann, ist die erste Abgasrückführleitung 4 mittels eines ersten Absperrventils 2 und die die Bypassleitung ausbildende zweite Abgasrückführleitung 7 mittels eines zweiten Absperrventils 6 absperrbar. Diese beiden Absperrventile 2, 6 sind mittels einer Steuer- und/oder Regeleinrichtung 18 gekoppelt, mittels der eine Abgasrückführmenge durch Ansteuerung der ersten und zweiten Absperrventile 2, 6 in Abhängigkeit von definierten Abgasrückführparametern steuerbar bzw. regelbar ist.

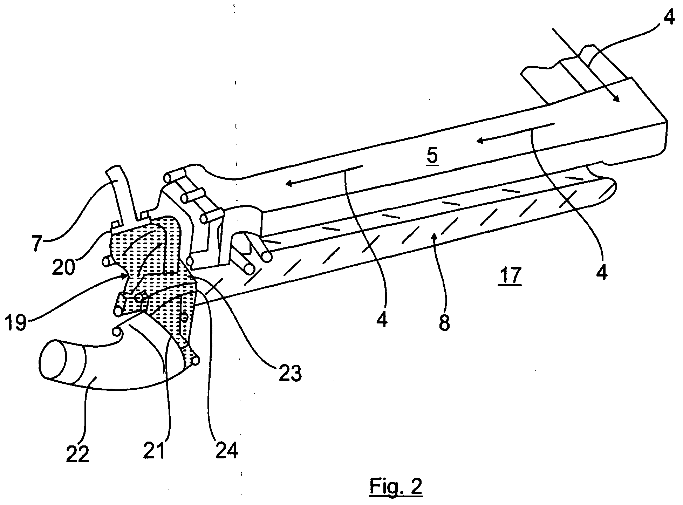

Wie dies aus den Fig. 1 bis 3 weiter ersichtlich ist, ist die erste Abgasrückführleitung 4 hier wesentlich länger ausgebildet als die gegenüberliegende zweite Abgasrückführleitung 7, da sich die erste Abgasrückführleitung 4 nicht nur von der Abgasseite 16 auf die Luftseite 17 des Motorblocks 15 bzw. der Brennkraftmaschine 9 erstreckt, wie dies in etwa im hier gezeigten Beispielfall bei der zweiten Abgasrückführleitung 7 der Fall ist, sondern erstreckt sich die erste Abgasrückführleitung 4 zudem auf der Luftseite 17 der Brennkraftmaschine 9 in Längsrichtung x entlang derselben bis zum luftseitigen End- bzw. Mündungsbereich der zweiten Abgasrückführleitung 7, wo die erste Abgasrückführleitung 4 und die zweite Abgasrückführleitung 7 dann in einen Flanschstutzen 19 (in Fig. 1 und 2 punktiert dargestellt) übergehen bzw. einmünden. Eine konkrete Ausgestaltungsmöglichkeit dieses Flanschstutzens 19 ist insbesondere in den Fig. 1 und 2 dargestellt.

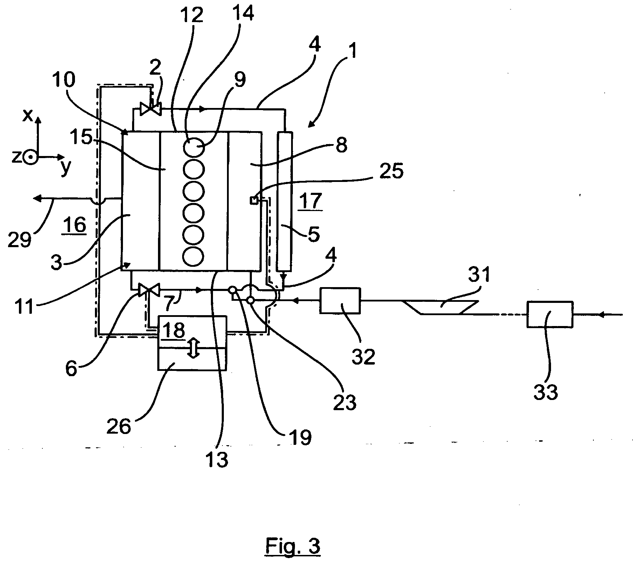

Auf seinem Weg zum in der Fig. 3 lediglich symbolisch durch einen Mischpunkt dargestellten Flanschstutzen 19 durchläuft die erste Abgasrückführleitung 4 den zuvor bereits erwähnten Abgaskühler 5, der sich hier im Wesentlichen über die gesamte Länge der Brennkraftmaschine 9 bzw. des Motorblocks 15 erstreckt und in dem das Abgas in definierter Weise abgekühlt werden kann.

Wie dies insbesondere den Fig. 1 und 2 entnommen werden kann, ist die zweite Abgasrückführleitung 7 als den Abgaskühler umgehende Bypassleitung mittels einer Flanschverbindung 20 am Flanschstutzen 19 stabil festgelegt und angebunden.

Der Abgaskühler 5 wird bevorzugt als Vollflusskühler betrieben, das heißt, dass das gesamte Kühlmittel durch den Abgaskühler 5 fließt.

Um sicherzustellen, dass die gegenüber der ersten Abgasrückführleitung 4 wesentlich kürzere Bypassleitung bzw. zweite Abgasrückführleitung 7 das unter Umgehung des Abgaskühlers 5 vom Abgaskrümmer 3 abgezweigte heiße Abgas möglichst ohne Temperaturverlust in den durch den Flanschstutzen 19 ausgebildeten Mischbereich führt, kann die zweite Abgasrückführleitung 7 zusätzlich mit einer thermischen Isolierung versehen sein, was hier allerdings nicht dargestellt ist.

Weiter ist am Flanschstutzen 19 stromab der Mündungsbereiche der ersten und zweiten Abgasrückführleitungen 4, 7 ein Luftleitungs-Anschlussflansch 21 ausgebildet, an dem eine Luftleitung 22 angeflanscht ist. Weiter ist am Flanschstutzen 19, stromab des Luftleitungs-Anschlussflansches 21 sowie stromab der Mündungsbereiche der ersten und zweiten Abgasrückführleitungen 4, 7 und damit im Wesentlichen im Bereich einer Luft-Zumischstelle 23 des Flanschstutzens 19 ein Verteilerrohr-Anschlussflansch 24 vorgesehen, an dem ein Luftverteilerrohr 8 der Brennkraftmaschine 9 angeflanscht ist.

An dieser Stelle sei erwähnt, dass vorstehend und nachstehend die Begrifflichkeit Flanschverbindung in einem weiten Umfang zu verstehen ist und ausdrücklich auch andere geeignete bzw. äquivalente Anbindungsmöglichkeiten umfassen soll.

Das Luftverteilerrohr 8 ist bevorzugt mit einem stirnseitigen Flanschbereich am Verteilerrohr-Anschlussflansch 24 angeflanscht und erstreckt sich von dort ausgehend im Wesentlichen über die gesamte Länge der Brennkraftmaschine 9 bzw. des Motorblocks 15. Wie dies insbesondere aus den Fig. 1 und 2 ersichtlich ist, verläuft der Abgaskühler 5 im Wesentlichen parallel zum Luftverteilerrohr 8 und es können diese beiden miteinander verbunden sein, zum Beispiel mittels einer Schraubverbindung oder dergleichen. Auch eine materialeinheitliche und/oder einstückige Verbindung der beiden Bauteile ist denkbar.

Wie dies weiter insbesondere der Prinzipdarstellung der Fig. 3 entnommen werden kann, ist am Luftverteilerrohr 8 weiter ein Temperatursensor 25 angeordnet, der mit der Steuer- und/oder Regeleinrichtung 18 signaltechnisch gekoppelt ist und mittels dem die Ist-Temperatur im Luftverteilerrohr 8 erfasst werden kann. Diese Ist-Temperatur wird mittels der Steuer- und/oder Regeleinrichtung mit einer in einem Kennfeld 26 der Steuer- und/oder Regeleinrichtung 18 abgelegten, bevorzugt lastabhängigen bzw. lastwechselabhängigen Soll-Temperatur verglichen. Unabhängig von der rückgeführten Abgasmenge werden die über die ersten und zweiten Absperrventile 2, 6 rückgeführten Abgasanteile durch Ansteuerung dieser beiden Absperrventile 2, 6 mittels der Steuer- und/oder Regeleinrichtung 18 so gesteuert bzw. geregelt, dass sich die gewünschte Soll-Temperatur im Luftverteilerrohr 8 einstellt. Das Verhältnis der über die beiden Absperrventile 2, 6 geführten Abgasmengen variiert dabei zwischen 0 und 100%, je nach vorherrschenden Betriebsbedingungen.

Die Durchflussmenge durch die beiden Absperrventile 2, 6 wird bevorzugt über deren Öffnungsgrad gesteuert. Hierfür weisen die beiden Absperrventile 2, 6 zum Beispiel Wegaufnehmer, über die die Steuer- und/oder Regeleinrichtung 18 den Öffnungsgrad der Absperrventile 2, 6 erfasst, und Aktuatoren 27, 28 (vergleiche Fig. 1 und 2) bzw. Stellglieder auf, über die die Steuer- und/oder Regeleinrichtung 18 einen hier nicht im Detail dargestellten Ventilbetätigungsmechanismus der beiden Absperrventile 2, 6 ansteuert. Die Steuer- und/oder Regeleinrichtung 18 stellt hier somit über die beiden Absperrventile 2, 6 sowohl die gesamte rückgeführte Abgasmenge als auch das Verhältnis der jeweils rückgeführten Abgasanteile ein.

Wie insbesondere die Fig. 1 und 2 verdeutlichen, ergibt sich mit dem erfindungsgemäßen Aufbau einer Abgasrückführeinrichtung 1 ein insgesamt kompakter und wenig Bauraum einnehmender Aufbau einer Brennkraftmaschine 9 mitsamt Abgasrückführeinrichtung 1, der auch für beengte Einbausituationen in Motorräumen von Fahrzeugen, insbesondere von Nutzfahrzeugen, geeignet ist und mittels dem zudem die Kondensatbildung auf einfache Weise verhindert bzw. zumindest erheblich reduziert werden kann.

In den Darstellungen der Fig. 1 und 3 ist ferner die vom Abgaskrümmer 3 wegführende Abgasleitung 29 gezeigt. Ferner ist in der Darstellung der Fig. 1 noch der Kühlwassereintritt 30 von einem Zylinderkopf des Motorblocks 15 in den Abgaskühler 5 schematisch gezeigt.

Weiter ist, was insbesondere der Fig. 3 zu entnehmen ist, in der Luftleitung 22 stromauf der Luft-Zumischstelle 23 ein Verdichter 31, insbesondere ein Verdichter eines hier nicht gezeigten Abgasturboladers, und ein Ladeluftkühler 32 sowie ein Luftfilter 33 angeordnet.

## Patentansprüche

1. Abgasrückführeinrichtung (1) für eine Brennkraftmaschine eines Fahrzeuges,
mit einer mittels einer ersten Absperreinrichtung (2) absperrbaren und von einer Abgasseite (16) der Brennkraftmaschine (9) abzweigenden ersten Abgasrückführleitung (4), die über einen Abgaskühler (5) zu einer Luftseite (17) der Brennkraftmaschine (9) rückgeführt ist,
mit einer mittels einer zweiten Absperreinrichtung (6) absperrbaren und den Abgaskühler (5) umgehenden Bypassleitung als zweite Abgasrückführleitung (7), mittels der Abgas aus der Brennkraftmaschine (9) ohne Abkühlung zu der Luftseite (17) der Brennkraftmaschine (9) rückführbar ist, wobei die erste Abgasrückführleitung (4) und die eine Bypassleitung ausbildende zweite Abgasrückführleitung (7) stromauf einer Luft-Zumischstelle (23) zusammengeführt sind, an der die mittels einer Luftleitung (22) zu der Luftseite (17) der Brennkraftmaschine (9) geführte Luft mit dem rückgeführten Abgas vermischbar ist, und
mit einer Steuer- und/oder Regeleinrichtung (18), mittels der die Abgasrückführmenge durch Ansteuerung der ersten und/oder zweiten Absperreinrichtung (2, 6) in Abhängigkeit von definierten und/oder vorgegebenen Abgasrückführparametern steuerbar und/oder regelbar ist,
**dadurch gekennzeichnet,**
**dass** die erste Abgasrückführleitung (4) und die zweite Abgasrückführleitung (7) mittels separater Leitungen von der Abgasseite (16) der Brennkraftmaschine (9) abgezweigt und von dort ausgehend jeweils auf die gegenüberliegende Luftseite (17) der Brennkraftmaschine (9) geführt sind, wobei die gegenüber der zweiten Abgasrückführleitung (7) längere, erste Abgasrückführleitung (4) anschließend weiter entlang der Brennkraftmaschine (9) bis zum luftseitigen Mündungsbereich der zweiten Abgasrückführleitung (7) geführt ist, wo die erste und zweite Abgasrückführleitung (4, 7) in einem Mischbereich zusammengeführt sind wobei die erste und zweite Abgasrückführleitung (4, 7) jeweils im Bereich und/oder entlang der gegenüberliegenden Stirnseiten (12, 13) eines Motorblocks (15) der Brennkraftmaschine (9) zu der Luftseite (17) der Brennkraftmaschine (9) geführt sind und der Mischbereich, an dem die erste und zweite Abgasrückführleitung (4, 7) zusammengeführt sind, durch einen, in Längserstreckungsrichtung des Abgaskühlers (5) gesehen, einem stirnseitigen Gehäusebereich des Abgaskühlers (5) zugeordneten Flanschstutzen (19) gebildet ist, in den die den Abgaskühler (5) durchgreifende erste Abgasrückführleitung (4) einmündet und an dem die zweite Abgasrückführleitung (7) angeschlossen ist.

2. Abgasrückführeinrichtung nach Anspruch 1, **dadurch gekennzeichnet, dass** die erste Abgasrückführleitung (4) und die zweite Abgasrückführleitung (7) mittels separater Leitungen von einem Abgaskrümmer (3) abgezweigt sind.

3. Abgasrückführeinrichtung nach Anspruch 2, **dadurch gekennzeichnet, dass** die erste Abgasrückführleitung (4) von einem in Längsrichtung eines Abgaskrümmers (3) der Brennkraftmaschine (9) gesehen ersten Abgaskrümmer-Endbereich (10) abgezweigt ist und dass die zweite Abgasrückführleitung (7) von einem in Längsrichtung eines Abgaskrümmers (3) der Brennkraftmaschine (9) gesehen zweiten Abgaskrümmer-Endbereich (11) abgezweigt ist, die dem ersten Abgaskrümmer-Endbereich (10) gegenüberliegt.

4. Abgasrückführeinrichtung nach einem der vorhergehenden Ansprüche, **dadurch gekennzeichnet, dass** sich der Abgaskühler (5) im Wesentlichen über die gesamte Länge der Brennkraftmaschine (9) erstreckt.

5. Abgasrückführeinrichtung nach einem der vorhergehenden Ansprüche, **dadurch gekennzeichnet,** der Flanschstutzen (19) an dem die zweite Abgasrückführleitung (7) angeschlossen ist, mittels einer Flanschverbindung (20) angeschlossen ist.

6. Abgasrückführeinrichtung nach einem der vorhergehenden Ansprüche, **dadurch gekennzeichnet, dass** die erste Abgasrückführleitung (4) materialeinheitlich und/oder einstückig in den Flanschstutzen (19) übergeht oder dass der Flanschstutzen (19) ein separates Bauteil ist, das mit der ersten Abgasrückführleitung (4) und/oder mit dem Abgaskühler (5) verbunden ist, insbesondere form- und/oder kraft- und/oder stoffschlüssig verbunden ist.

7. Abgasrückführeinrichtung nach einem der vorhergehenden Ansprüche, **dadurch gekennzeichnet,**
**dass** am Flanschstutzen (19) stromab der Mündungsbereiche der ersten und zweiten Abgasrückführleitungen (4, 7) ein Luftleitungs-Anschlussflansch (21) ausgebildet ist, an den die Luftleitung (22) angeflanscht ist, und
**dass** am Flanschstutzen (19), stromauf des Luftleitungs-Anschlussflansches (21) sowie stromab der Mündungsbereiche der ersten und zweiten Abgasrückführleitungen (4, 7) und damit im Wesentlichen im Bereich der Luft-Zumischstelle (23), ferner ein Verteilerrohr-Anschlussflansch (24) vorgesehen ist, an dem ein Luftverteilerrohr (8) der Brennkraftmaschine (9) angeflanscht ist.

8. Abgasrückführeinrichtung nach Anspruch 7, **dadurch gekennzeichnet, dass** das Luftverteilerrohr (8) mit einem stirnseitigen Flanschbereich am Verteilerrohr-Anschlussflansch (24) angeflanscht ist und sich von dort ausgehend über im Wesentlichen die gesamte Länge der Brennkraftmaschine (9) erstreckt.

9. Abgasrückführeinrichtung nach einem der vorhergehenden Ansprüche, **dadurch gekennzeichnet, dass** der Abgaskühler (5) im wesentlichen parallel zum Luftverteilerrohr (8) verläuft und/oder dass der Abgaskühler (5) mit dem Luftverteilerrohr (8) verbunden ist, insbesondere materialeinheitlich und/oder einstückig verbunden ist oder form- und/oder kraft- und/oder stoffschlüssig verbunden ist.

10. Abgasrückführeinrichtung nach einem der vorhergehenden Ansprüche, **dadurch gekennzeichnet,**
**dass** am Luftverteilerrohr (8) wenigstens ein Temperatursensor (25) angeordnet ist, der mit der Steuer- und/oder Regeleinrichtung (18) signalübertragungstechnisch gekoppelt ist und die Ist-Temperatur im Luftverteilerrohr (8) erfasst,
**dass** die Steuer- und/oder Regeleinrichtung (18) die mittels des wenigstens einen Temperatursensors (25) erfasste Ist-Temperatur mit einer definierten und/oder vorgegebenen Soll-Temperatur, insbesondere mit einer in einem Kennfeld (26) der Steuer- und/oder Regeleinrichtung (18) abgelegten lastabhängigen und/oder lastwechselabhängigen Soll-Temperatur, vergleicht und bei einer erfassten Abweichung der Ist-Temperatur von der Soll-Temperatur die erste und/oder zweite Absperreinrichtung (2, 62) so ansteuert, dass über die erste und/oder zweite Abgasrückführleitung (4, 7) eine die Soll-Temperatur im Luftverteilerrohr (8) einstellende Menge an Abgas rückführbar ist.

11. Abgasrückführeinrichtung nach einem der vorhergehenden Ansprüche, **dadurch gekennzeichnet, dass** in der Luftleitung (22) stromauf der Luft-Zumischstelle (23), ein Verdichter (31), insbesondere ein Verdichter eines Abgasturboladers, und/oder ein Ladeluftkühler (32) und/oder ein Luftfilter (33) angeordnet ist.

## Claims

1. Exhaust-gas recirculation device (1) for an internal combustion engine of a vehicle,
having a first exhaust-gas recirculation line (4) which can be shut off by means of a first shut-off device (2) and which branches off from an exhaust-gas side (16) of the internal combustion engine (9) and which leads back to an air side (17) of the internal combustion engine (9) via an exhaust-gas cooler (5),
having as second exhaust-gas recirculation line (7) a bypass line which can be shut off by means of a second shut-off device (6) and which bypasses the exhaust-gas cooler (5) and by means of which exhaust gas from the internal combustion engine (9) can be recirculated to the air side (17) of the internal combustion engine (9) without being cooled, wherein the first exhaust-gas recirculation line (4) and the second exhaust-gas recirculation line (7), which forms a bypass line, merge upstream of an air admixing point (23) at which the air conducted to the air side (17) of the internal combustion engine (9) via an air line (22) can be mixed with the recirculated exhaust gas, and
having a control and/or regulating unit (18) by means of which the recirculated exhaust-gas quantity can be controlled and/or regulated, through the actuation of the first and/or second shut-off device (2, 6), as a function of defined and/or predefined exhaust-gas recirculation parameters,
**characterized in that** the first exhaust-gas recirculation line (4) and the second exhaust-gas recirculation line (7) are branched off by means of separate lines from the exhaust-gas side (16) of the internal combustion engine (9) and are led from there in each case to the opposite air side (17) of the internal combustion engine (9), wherein the first exhaust-gas recirculation line (4), which is longer than the second exhaust-gas recirculation line (7), is subsequently led onward along the internal combustion engine (9) to the air-side opening region of the second exhaust-gas recirculation line (7), where the first and second exhaust-gas recirculation lines (4, 7) merge at a mixing region, wherein the first and second exhaust-gas recirculation lines (4, 7) are led in each case to the air side (17) of the internal combustion engine (9) in the region of and/or along the opposite face sides (12, 13) of an engine block (15) of the internal combustion engine (9) and the mixing region at which the first and second exhaust-gas recirculation lines (4, 7) merge is formed by a flanged connector (19) which is assigned to an end-side housing region of the exhaust-gas cooler (5) as viewed in the direction of longitudinal extent of the exhaust-gas cooler (5) and into which the first exhaust-gas recirculation line (4), which extends through the exhaust-gas cooler (5), opens and to which the second exhaust-gas recirculation line (7) is connected.

2. Exhaust-gas recirculation device according to Claim 1, **characterized in that** the first exhaust-gas recirculation line (4) and the second exhaust-gas recirculation line (7) are branched off by means of separate lines from an exhaust manifold (3).

3. Exhaust-gas recirculation device according to Claim 2, **characterized in that** the first exhaust-gas recirculation line (4) is branched off from a first exhaust manifold end region (10) as viewed in the longitudinal direction of an exhaust manifold (3) of the internal combustion engine (9) and **in that** the second exhaust-gas recirculation line (7) is branched off from a second exhaust manifold end region (11) as viewed in the longitudinal direction of an exhaust manifold (3) of the internal combustion engine (9), which is situated opposite the first exhaust manifold end region (10).

4. Exhaust-gas recirculation device according to one of the preceding claims, **characterized in that** the exhaust-gas cooler (5) extends substantially over the entire length of the internal combustion engine (9).

5. Exhaust-gas recirculation device according to one of the preceding claims, **characterized in that** the flanged connector (19), to which the second exhaust-gas recirculation line (7) is connected, is connected by means of a flange connection (20).

6. Exhaust-gas recirculation device according to one of the preceding claims, **characterized in that** the first exhaust-gas recirculation line (4) merges in a materially integral and/or unipartite fashion into the flanged connector (19), or **in that** the flanged connector (19) is a separate component which is connected, in particular in a positively locking and/or non-positively locking and/or cohesive manner, to the first exhaust-gas recirculation line (4) and/or to the exhaust-gas cooler (5).

7. Exhaust-gas recirculation device according to one of the preceding claims, **characterized in that**
an air line connection flange (21) is formed on the flanged connector (19) downstream of the opening regions of the first and second exhaust-gas recirculation lines (4, 7), on which air line connection flange the air line (22) is flange-mounted, and
**in that** furthermore a distributor pipe connection flange (24) is provided on the flanged connector (19) upstream of the air line connection flange (21) and downstream of the opening regions of the first and second exhaust-gas recirculation lines (4, 7) and thus substantially in the region of the air admixing point (23), on which distributor pipe connection flange an air distributor pipe (8) of the internal combustion engine (9) is flange-mounted.

8. Exhaust-gas recirculation device according to Claim 7, **characterized in that** the air distributor pipe (8) is flange-mounted with an end-side flange region on the distributor pipe connection flange (24) and extends from there over substantially the entire length of the internal combustion engine (9).

9. Exhaust-gas recirculation device according to one of the preceding claims, **characterized in that** the exhaust-gas cooler (5) runs substantially parallel to the air distributor pipe (8) and/or **in that** the exhaust-gas cooler (5) is connected, in particular in a materially integral and/or unipartite fashion and/or in a positively locking and/or non-positively locking and/or cohesive fashion, to the air distributor pipe (8).

10. Exhaust-gas recirculation device according to one of the preceding claims, **characterized in that**
at least one temperature sensor (25) is arranged on the air distributor pipe (8), which temperature sensor is coupled in signal-transmitting fashion to the control and/or regulating unit (18) and detects the actual temperature in the air distributor pipe (8),
**in that** the control and/or regulating unit (18) compares the actual temperature detected by means of the at least one temperature sensor (25) with a defined and/or predefined setpoint temperature, in particular with a load-dependent and/or load-alteration-dependent setpoint temperature stored in a characteristic map (26) of the control and/or regulating unit (18), and if a deviation between the actual temperature and the setpoint temperature is detected, said control and/or regulating unit actuates the first and/or second shut-off device (2, 62) such that an exhaust-gas quantity which sets the setpoint temperature in the air distributor pipe (8) can be recirculated via the first and/or second exhaust-gas recirculation lines (4, 7).

11. Exhaust-gas recirculation device according to one of the preceding claims, **characterized in that** a compressor (31), in particular a compressor of an exhaust-gas turbocharger, and/or a charge-air cooler (32) and/or an air filter (33) are/is arranged in the air line (22) upstream of the air admixing point (23).

## Revendications

1. Dispositif de recirculation de gaz d'échappement (1) pour un moteur à combustion interne d'un véhicule,
comprenant une première conduite de recirculation de gaz d'échappement (4) pouvant être bloquée au moyen d'un premier dispositif de blocage (2) et partant depuis un côté de gaz d'échappement (16) du moteur à combustion interne (9), laquelle revient, par le biais d'un refroidisseur de gaz d'échappement (5), jusqu'à un côté d'air (17) du moteur à combustion interne (9),
comprenant une conduite de dérivation en tant que deuxième conduite de recirculation de gaz d'échappement (7), pouvant être bloquée au moyen d'un deuxième dispositif de blocage (6) et contournant le refroidisseur de gaz d'échappement (5), au moyen de laquelle du gaz d'échappement peut être recirculé depuis le moteur à combustion interne (9) sans refroidissement jusqu'au côté d'air (17) du moteur à combustion interne (9), la première conduite de recirculation de gaz d'échappement (4) et la deuxième conduite de recirculation de gaz d'échappement (7) constituant une conduite de dérivation étant réunies en amont d'une zone d'addition d'air (23) au niveau de laquelle l'air guidé au moyen d'une conduite d'air (22) vers le côté d'air (17) du moteur à combustion interne (9) peut être mélangé au gaz d'échappement recirculé, et
comprenant un dispositif de commande et/ou de régulation (18), au moyen duquel la quantité de recirculation de gaz d'échappement peut être commandée et/ou régulée par commande du premier et/ou du deuxième dispositif de blocage (2, 6) en fonction de paramètres de recirculation de gaz d'échappement définis et/ou prédéfinis, **caractérisé en ce que** la première conduite de recirculation de gaz d'échappement (4) et la deuxième conduite de recirculation de gaz d'échappement (7) partent, au moyen de conduites séparées depuis le côté de gaz d'échappement (16) du moteur à combustion interne (9) et sont guidées de là respectivement au côté d'air opposé (17) du moteur à combustion interne (9), la première conduite de recirculation de gaz d'échappement (4) plus longue que la deuxième conduite de recirculation de gaz d'échappement (7) étant ensuite guidée plus loin le long du moteur à combustion interne (9) jusqu'à la région d'embouchure côté air de la deuxième conduite de recirculation de gaz d'échappement (7), où la première et la deuxième conduite de recirculation de gaz d'échappement (4, 7) sont réunies dans une région de mélange, la première et la deuxième conduite de recirculation de gaz d'échappement (4, 7) étant guidées à chaque fois dans la région et/ou le long des côtés frontaux opposés (12, 13) d'un bloc-moteur (15) du moteur à combustion interne (9) jusqu'au côté d'air (17) du moteur à combustion interne (9) et la région de mélange au niveau de laquelle sont réunies la première et la deuxième conduite de recirculation de gaz d'échappement (4, 7) étant formée par un raccord à bride (19) associé à une région de boîtier frontale du refroidisseur de gaz d'échappement (5), vu dans la direction d'étendue longitudinale du refroidisseur de gaz d'échappement (5), dans lequel raccord à bride débouche la première conduite de recirculation de gaz d'échappement (4) traversant le refroidisseur de gaz d'échappement (5) et auquel est raccordée la deuxième conduite de recirculation de gaz d'échappement (7).

2. Dispositif de recirculation de gaz d'échappement selon la revendication 1, **caractérisé en ce que** la première conduite de recirculation de gaz d'échappement (4) et la deuxième conduite de recirculation de gaz d'échappement (7) partent d'un collecteur de gaz d'échappement (3) au moyen de conduites séparées.

3. Dispositif de recirculation de gaz d'échappement selon la revendication 2, **caractérisé en ce que** la première conduite de recirculation de gaz d'échappement (4) part depuis une première région d'extrémité du collecteur de gaz d'échappement (10), vue dans la direction longitudinale d'un collecteur de gaz d'échappement (3) du moteur à combustion interne (9), et **en ce que** la deuxième conduite de recirculation de gaz d'échappement (7) part depuis une deuxième région d'extrémité du collecteur de gaz d'échappement (11), vue dans la direction longitudinale d'un collecteur de gaz d'échappement (3) du moteur à combustion interne (9), qui est opposée à la première région d'extrémité du collecteur de gaz d'échappement (10).

4. Dispositif de recirculation de gaz d'échappement selon l'une quelconque des revendications précédentes, **caractérisé en ce que** le refroidisseur de gaz d'échappement (5) s'étend essentiellement sur toute la longueur du moteur à combustion interne (9).

5. Dispositif de recirculation de gaz d'échappement selon l'une quelconque des revendications précédentes, **caractérisé en ce que** le raccord à bride (19) auquel est raccordée la deuxième conduite de recirculation de gaz d'échappement (7), est raccordé au moyen d'une connexion à bride (20).

6. Dispositif de recirculation de gaz d'échappement selon l'une quelconque des revendications précédentes, **caractérisé en ce que** la première conduite de recirculation de gaz d'échappement (4) se prolonge, venue de matière et/ou d'une seule pièce, dans le raccord à bride (19) ou **en ce que** le raccord à bride (19) est un composant séparé qui est connecté à la première conduite de recirculation de gaz d'échappement (4) et/ou au refroidisseur de gaz d'échappement (5), en particulier par engagement par correspondance de formes, et/ou par force et/ou par liaison de matière.

7. Dispositif de recirculation de gaz d'échappement selon l'une quelconque des revendications précédentes, **caractérisé en ce qu'**au niveau du raccord à bride (19), en aval des régions d'embouchure de la première et de la deuxième conduite de recirculation de gaz d'échappement (4, 7), est réalisée une bride de raccordement de conduite d'air (21) à laquelle est bridée la conduite d'air (22), et **en ce qu'**au niveau du raccord à bride (19), en amont de la bride de raccordement de conduite d'air (21) et en aval des régions d'embouchure de la première et de la deuxième conduite de recirculation de gaz d'échappement (4, 7), et par conséquent essentiellement dans la région de la zone d'addition d'air (23), est en outre prévue une bride de raccordement de tube distributeur (24), à laquelle est bridé un tube distributeur d'air (8) du moteur à combustion interne (9).

8. Dispositif de recirculation de gaz d'échappement selon la revendication 7, **caractérisé en ce que** le tube distributeur d'air (8) est bridé à la bride de raccordement de tube distributeur (24) par une région de bride frontale, et s'étend à partir de là sur sensiblement la longueur totale du moteur à combustion interne (9).

9. Dispositif de recirculation de gaz d'échappement selon l'une quelconque des revendications précédentes, **caractérisé en ce que** le refroidisseur de gaz d'échappement (5) s'étendant essentiellement parallèlement au tube distributeur d'air (8) et/ou **en ce que** le refroidisseur de gaz d'échappement (5) est connecté au tube distributeur d'air (8), en particulier lui est connecté venu de matière et/ou d'une seule pièce ou lui est connecté par engagement par correspondance de formes et/ou par force et/ou par liaison de matière.

10. Dispositif de recirculation de gaz d'échappement selon l'une quelconque des revendications précédentes, **caractérisé en ce qu'**au moins un capteur de température (25) est disposé au niveau du tube distributeur d'air (8), lequel est accouplé au dispositif de commande et/ou de régulation (18) par une technique de transmission des signaux et détecte la température réelle dans le tube distributeur d'air (8), **en ce que** le dispositif de commande et/ou de régulation (18) compare la température réelle détectée au moyen de l'au moins un capteur de température (25) avec une température de consigne définie et/ou prédéfinie, en particulier avec une température de consigne dépendant de la charge et/ou dépendant du changement de charge, consignée dans un champ caractéristique (26) du dispositif de commande et/ou de régulation (18), et en cas d'écart entre la température réelle et la température de consigne, commande le premier et/ou le deuxième dispositif de blocage (2, 62) de telle sorte qu'une quantité de gaz d'échappement ajustant la température de consigne dans le tube distributeur d'air (8) puisse être recirculée par le biais de la première et/ou de la deuxième conduite de recirculation de gaz d'échappement (4, 7).

11. Dispositif de recirculation de gaz d'échappement selon l'une quelconque des revendications précédentes, **caractérisé en ce que** dans la conduite d'air (22), en amont de la zone d'addition d'air (23), sont disposés un compresseur (31), en particulier un compresseur d'un turbocompresseur à gaz d'échappement, et/ou un refroidisseur d'air de suralimentation (32) et/ou un filtre à air (33).
